# FASCICULE DE BREVET EUROPEEN

(11) **EP 2 463 529 B1**
(45) Date de publication et mention de la délivrance du brevet: **09.10.2013**
(21) Numéro de dépôt: 11192723.2
(22) Date de dépôt: 09.12.2011
(51) Int. Cl.: F16B 5/06, F16B 19/10, F16L 3/10

(54) **Dispositif de fixation avec verrouillage renforcé**
Befestigungsvorrichtung mit verstärkter Verriegelung
Attachment device with reinforced locking

(30) Priorité: 13.12.2010 FR 1060430
(43) Date de publication de la demande: 13.06.2012
(73) Titulaire: A. Raymond et Cie, 38000 Grenoble (FR)
(72) Inventeur: Sicot, Mikael, 38120 Fontanil Cornillon (FR)
(74) Mandataire: RACKETTE Partnerschaft Patentanwälte

(56) Documents cités:
- DE-A1- 2 830 415
- DE-A1-102006 002 195
- US-A- 4 602 760
- US-A1- 2006 066 080
- US-A1- 2008 301 915
- US-A1- 2010 199 464
- US-B1- 6 196 756

## Description

L'invention concerne, de façon générale, un dispositif de fixation avec verrouillage renforcé.

Ce type de dispositifs de fixation est couramment utilisé, notamment pour la fixation de tubes, par exemple dans le domaine de l'automobile.

On connait notamment, par la publication GB 1 301 516, un dispositif de fixation comportant un élément d'ancrage de type rivet dont le corps est traversé par un orifice de passage, dont l'embase est apte à venir en appui contre le support auquel on veut fixer les tubes. L'embase est prolongée par deux dents, légèrement resserrées, élastiquement déformables, aptes à être insérées dans un orifice prévu dans le support. Ce dispositif de fixation comporte également un élément de blocage dont le corps est pourvu d'une tête et d'une tige d'expansion apte à être déplacée dans l'orifice de passage pour écarter les dents du rivet et ainsi solidariser l'élément d'ancrage au support. L'élément d'ancrage est par ailleurs pourvu de deux bras pourvus de crochets, les bras définissant une cavité apte à recevoir la tête du rivet, les bras étant eux-mêmes aptes à se déformer élastiquement au passage de cette tête, les crochets se resserrant après passage de la tête, au-dessus de la tête, pour verrouiller la position de l'élément de blocage par rapport à l'élément d'ancrage. Afin d'assurer un verrouillage efficace, les bras sont de construction massive. De ce fait, l'obtention du verrouillage nécessite un effort important. De plus, ce dispositif de fixation présente l'inconvénient de pouvoir être facilement déverrouillé.

La publication US 2004/0 091 334 décrit un dispositif de fixation sensiblement similaire au précédent. Il s'en distingue notamment par le fait que la tête du rivet est pourvue de pattes de verrouillage élastiquement déformables dont les crochets sont aptes à venir s'accrocher sous une collerette prévue sur l'embase et définissant un épaulement pour assurer le verrouillage. Ce dispositif de fixation présente l'inconvénient majeur de pouvoir être facilement déverrouillé par une action directe sur les pattes de verrouillage.

La publication EP 1 013 978 décrit un dispositif sensiblement similaire au précédent présentant le même inconvénient majeur.

La publication DE 10 2006 002195 décrit un dispositif de fixation selon le préambule de la revendication 1.

Le but de l'invention est de remédier à ces inconvénients en proposant un dispositif de fixation de conception simple et robuste, facilement verrouillable, difficilement déverrouillable.

A cet effet, l'invention a pour objet un dispositif de fixation avec verrouillage renforcé, pour la fixation d'éléments sur un support, le dispositif de fixation comportant au moins :
- un élément d'ancrage traversé par un orifice de passage, l'élément d'ancrage comportant une embase apte à venir en appui contre le support et prolongée par un organe déformable apte être inséré au travers ou dans le support,
- un élément de blocage comportant une tête destinée à recevoir lesdits éléments à fixer et prolongée par une tige d'expansion mobile dans l'orifice de passage entre une position neutre et une position d'expansion dans laquelle elle est agencée pour déformer l'organe déformable et empêcher son retrait du support,
l'élément d'ancrage et l'élément de blocage étant conformés pour se verrouiller mutuellement quand l'élément de blocage est dans la position d'expansion,
l'élément d'ancrage comportant au moins une patte de verrouillage, élastiquement déformable, prévue inclinée et dont l'extrémité libre est orientée vers l'embase, en ce que l'élément d'ancrage comporte au moins un montant délimitant avec la tige d'expansion au moins une zone de réception de la patte de verrouillage dans la position d'expansion de l'élément de blocage, le montant étant pourvu d'au moins une butée apte à coopérer avec la patte de verrouillage pour verrouiller l'élément de blocage par rapport à l'élément d'ancrage dans la position d'expansion de l'élément de blocage. Par conséquent, le dispositif de fixation selon l'invention est de conception simple et robuste, il peut être facilement verrouillé et difficilement déverrouillé.

Le dispositif de fixation selon l'invention peut avantageusement présenter les particularités suivantes :
- la patte de verrouillage est inclinée par rapport à une perpendiculaire à l'embase, d'un angle α compris entre 0° et 45° et de préférence compris entre 0° et 30° ;
- la patte de verrouillage et la paroi de la zone de réception ont des profils sensiblement complémentaires permettant de limiter, voire d'annuler l'espace résiduel situé entre la paroi et la patte de verrouillage dans la position d'expansion dudit élément de blocage ;
- la tête comporte au moins une nervure s'étendant le long du montant à l'opposée de la butée, sensiblement parallèle à l'axe de la tige d'expansion, et agencée pour limiter la déformation du montant ;
- la tête comporte au moins un élément de renfort, porté par le montant à l'opposée de la butée, sensiblement perpendiculaire à l'axe de la tige d'expansion, et agencé pour limiter la déformation dudit montant.

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en perspective du dispositif de fixation selon l'invention, représenté avant verrouillage et avec son collier ouvert ;
- la figure 2 est une vue de coté du dispositif de fixation de la figure 1, représenté après verrouillage et avec ses coques d'attache du tube en position fermée.

Le dispositif de fixation avec verrouillage renforcé selon l'invention peut être utilisé pour la fixation de tout type d'éléments sur tout type de support. La suite de la description est centrée, de manière non limitative sur un dispositif de fixation pour tubes.

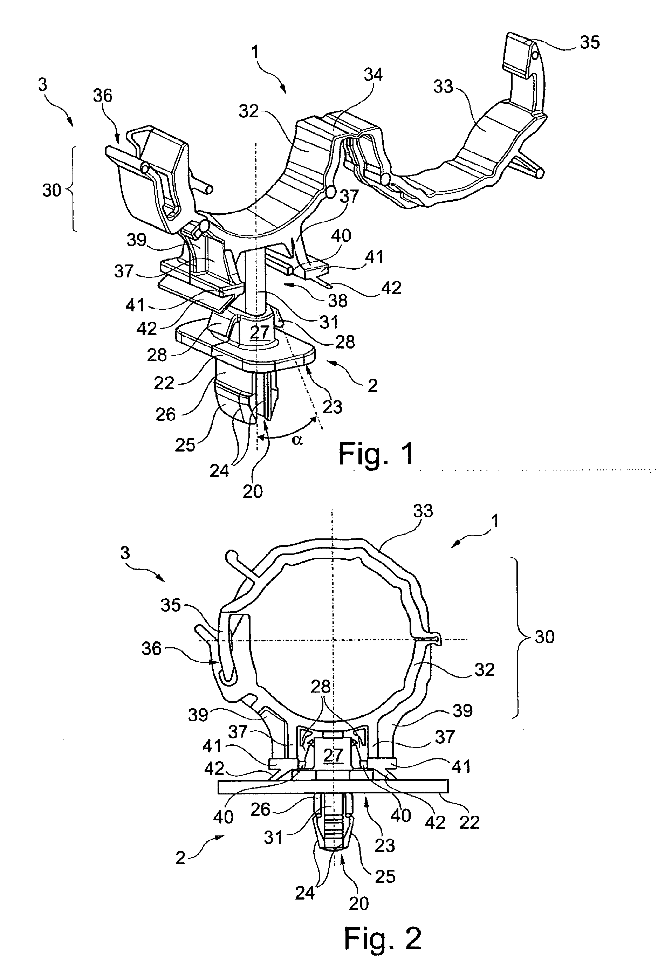

En référence aux figures 1 et 2, le dispositif pour fixation 1 selon l'invention comporte un élément d'ancrage 2 apte à être en partie inséré dans un orifice (non représenté) prévu dans un corps (non représenté) sur lequel on veut fixer un ou plusieurs tubes (non représentés), un élément de blocage 3 apte à bloquer l'élément d'ancrage 2 sur le support et à recevoir le tube à fixer sur le support, et des moyens de verrouillage pour verrouiller l'élément de blocage 3 à l'élément d'ancrage 2.

L'élément de blocage 3 est formé d'une pièce monobloc comportant une tête 30 couplée à une tige d'expansion 31. Dans cet exemple, la tête 30 est pourvue d'une coque inférieure 32 et d'une coque supérieure 33 définissant chacune un berceau apte à recevoir une partie du tube à fixer, les coques inférieure 32 et supérieure 33 étant articulées entre-elles par l'intermédiaire d'une charnière 34 permettant de les fermer pour enserrer le tube. Les extrémités libres des coques supérieure 33 et inférieure 32 sont pourvues respectivement d'un crochet de fermeture 35 et d'un logement de fermeture 36 aptes à coopérer pour bloquer les coques inférieure 32 et supérieure 33 dans leur position fermée. Le tube peut ainsi être solidarisé à l'élément de blocage 3. La tige d'expansion 31 s'étend sensiblement du milieu de la coque inférieure 32, à l'opposé du centre d'incurvation du berceau correspondant. Elle a une section sensiblement oblongue dont les dimensions sont sensiblement constantes le long de son axe longitudinal. La tige d'expansion 31 peut bien entendu avoir toute autre section adaptée, par exemple circulaire, carrée, rectangulaire, triangulaire, octogonale. La tête 30 est prolongée, à l'opposé du berceau de la coque inférieure 32, par deux montants 37, sensiblement parallèles entre eux et par rapport à l'axe médian du berceau de la coque inférieure 32, et définissant une zone de réception 38 (visible sur la figure 1) les séparant respectivement chacun de la tige d'expansion 31. Dans une variante de réalisation, non représentée, la tête peut ne comporter qu'un seul montant. La tête peut également être prolongée par une jupe dont la paroi définit un montant continu autour de la zone de réception. Dans l'exemple illustré, les montants 37 et la coque inférieure 31 sont reliés par des nervures 39 prévues à l'extérieure de la zone de réception 38 et s'étendant le long des montants 37. Ces nervures 39 s'étendent sensiblement parallèlement à l'axe de la tige d'expansion 31 et limitent la déformation des montants 37 et donc de la zone de réception 38 lorsque l'élément de blocage 3 est sollicité. La base de chaque montant 37 est prolongée latéralement, vers l'intérieur de la zone de réception, par une butée 40 s'étendant sensiblement perpendiculairement à l'axe de la tige d'expansion 31 dont la fonction est expliquée plus loin. La base de chaque montant 37 est de plus prolongée latéralement, à l'opposé de la butée 40, par une barre de renfort 41 sensiblement perpendiculaire à l'axe de la tige d'expansion 31 et limitant la déformation des montants 37 et donc celle de la zone de réception 38 lorsque l'élément de blocage 3 est sollicité. Les nervures 39 et les barres de renfort 41 rendent les montants 37 sensiblement indéformables. Ainsi, l'espace entre les butées 40 reste sensiblement constant, ceci quels que soient les efforts appliqués sur l'élément de blocage 3. Le dispositif de fixation 1 selon l'invention peut donc difficilement être déverrouillé par déformation des montants 37. L'élément de blocage 3 comporte par ailleurs deux languettes 42 élastiques, s'étendant de manière inclinée de chaque barre de renfort 41, chacune orientée vers l'extrémité libre de la tige d'expansion 31 en s'en éloignant. Ces languettes 42 sont destinées à venir en appui contre l'embase 2 afin notamment de limiter le jeu entre l'élément de blocage 3 et l'élément d'ancrage 2, en position d'expansion de l'élément de blocage 3.

L'élément d'ancrage 2 est formé d'une pièce monobloc dont le corps est traversé par un orifice de passage 20, de section complémentaire à celle de la tige d'expansion 31 pour autoriser son passage. La tige d'expansion 31 est ainsi mobile par rapport à l'élément de blocage 3 entre une position neutre et une position d'expansion décrite plus loin. L'élément d'ancrage 2 comporte une embase 22 s'étendant perpendiculairement à l'axe de l'orifice de passage 20 et définissant une surface d'appui 23 apte à venir en appui contre le support. La surface d'appui 23 est prolongée par un organe déformable apte à être inséré dans le support, par exemple au travers d'un orifice (non représenté) prévu à cet effet. Dans l'exemple représenté, l'organe déformable comporte deux dents 24 élastiquement déformables, resserrées l'une de l'autre de manière à pouvoir être écartées lors du passage entre-elles, de la tige d'expansion 31 de sa position neutre dans laquelle elle n'agit pas sur les dents 24 à sa position d'expansion dans laquelle les dents 24 sont écartées l'une de l'autre. Ces dents 24 sont pourvues chacune d'un chanfrein 25 facilitant leur insertion dans l'orifice du support et de crans 26 s'étendant de leurs parois externes et destinés à se cramponner sur la périphérie de l'orifice du support pour renforcer l'ancrage. L'élément d'ancrage 2 comporte également une couronne 27 s'étendant à l'opposé de la surface d'appui 23. L'élément d'ancrage 3 comporte enfin deux pattes de verrouillage 28, s'étendant inclinées depuis le bord libre de la couronne 27 et orientées vers la surface d'appui 23 de l'embase 22. Chaque patte de verrouillage 28 est par exemple inclinée par rapport à l'axe longitudinal de l'élément d'ancrage 3, correspondant à l'axe de l'orifice de passage 20, d'un angle α (représenté sur la figure 1) compris entre 0°et 45° et de préférence compris entre 0° et 30°. Les pattes de verrouillage 28 sont destinées à, dans la position d'expansion de la tige d'expansion 31, s'insérer dans la zone de réception 38. Elles sont resserrées l'une vers l'autre par les butées 40 lors du passage de la position neutre à la position d'expansion, ce resserrement autorisant leur insertion dans la zone de réception 38. Une fois les butées 40 passées, les pattes de verrouillage 28 s'écartent de nouveau, par simple déformation élastique vers leur état de repos, leurs extrémités venant alors en appui sur les butées 40 correspondantes. Les pattes de verrouillage 28 et les butées 40 définissent ainsi des moyens de verrouillage de l'élément d'ancrage 2 avec l'élément de blocage 3. Les pattes de verrouillage 28 et la paroi de la zone de réception 38 ont des profils sensiblement complémentaires. Ainsi, dans la position d'expansion, lorsque les pattes de verrouillage 28 sont dans la zone de réception, l'espace résiduel entre les pattes de verrouillage 28 et la paroi de la zone de réception 38 est limité, voir inexistant. Il est alors difficile, voire impossible, de parvenir à passer derrière les pattes de verrouillage 28 pour tenter de les décaler de la paroi de la zone de réception 38 et de les déformer afin de déverrouiller le dispositif de fixation 1. Il est de plus quasiment impossible de parvenir à faire cette manipulation simultanément sur les deux pattes de verrouillage 28. L'élément de blocage 3 et l'élément d'ancrage 2 sont donc solidaires l'un de l'autre et peuvent être difficilement déverrouillés. De plus, dans cette position d'expansion, les languettes 42 sont en appui sur le dessus de l'embase 22 et interdisent l'accès latéral à la zone de verrouillage entre les pattes de verrouillage 28 et les butées 40. Les accès frontal et dorsal aux pattes de verrouillage 28 sont rendus difficile par le passage du tube maintenu.

Le tube tenu par l'élément de blocage 3 est donc solidaire du support par l'intermédiaire de l'élément d'ancrage 2. La faible inclinaison des pattes de verrouillage 28 induit des efforts faibles lors de leur insertion dans la zone de réception 38 et des efforts d'arrachage très importants pour tenter de les déverrouiller. Le dispositif de fixation 1 selon l'invention est donc facile à assembler et, une fois verrouillé, il est difficilement déverrouillé. L'élément d'ancrage 2 et l'élément de blocage 3 peuvent être obtenus par moulage d'une matière plastique adaptée telle que par exemple le polyamide, le polypropylène. Le dispositif de fixation 1 selon l'invention est donc simple à fabriquer et robuste. Les formes et dimensions des éléments d'ancrage 2 et de blocage 3 du dispositif de fixation 1 peuvent bien entendu être adaptées en fonction des besoins tout en restant dans les limites de la présente invention.

Pour fixer un tube au moyen du dispositif de fixation 1 selon l'invention, on peut procéder comme suit. Dans un premier temps, on insère les dents 24 au travers d'un orifice prévu dans le support, la surface d'appui 23 de l'embase 22 étant plaquée contre le support. Dans un second temps, on rapproche l'élément de blocage 3 de l'élément d'ancrage 2 de manière à déplacer la tige d'expansion 31 de sa position neutre à sa position d'expansion dans laquelle, simultanément, les dents 24 sont écartées pour solidariser l'élément d'ancrage 2 au support, les languettes de verrouillage 28 viennent en appui sur les surfaces d'appui des butées 40 pour solidariser l'élément de blocage 3 à l'élément d'ancrage 2, les languettes d'accrochage 42 traversent les ouvertures du support pour renforcer le maintien de l'élément de blocage 3 sur le support. Dans un troisième temps, on place de tube sur le berceau de la coque inférieure 32 et on rabat la coque supérieure 33 qui se ferme, la coque inférieure 32 et la coque supérieure 33 sont verrouillées au moyen du crochet de fermeture 35 et du logement de fermeture 36. Grâce au dispositif de fixation 1 selon l'invention, le tube est ainsi fixé de manière et peut difficilement être déverrouillé du support.

## Revendications

1. Dispositif de fixation (1) avec verrouillage renforcé, pour la fixation d'éléments sur un support, ledit dispositif de fixation (1) comportant au moins :
- un élément d'ancrage (2) traversé par un orifice de passage (20), ledit élément d'ancrage (2) comportant une embase (22) apte à venir en appui contre ledit support et prolongée par un organe déformable (24) apte être inséré au travers ou dans ledit support,
- un élément de blocage (3) comportant une tête (30) destinée à recevoir lesdits éléments à fixer et prolongée par une tige d'expansion (31) mobile dans ledit orifice de passage (20) entre une position neutre et une position d'expansion dans laquelle elle est agencée pour déformer ledit organe déformable (24) et empêcher son retrait dudit support,
ledit élément d'ancrage (2) et ledit élément de blocage (3) étant conformés pour se verrouiller mutuellement quand ledit élément de blocage (3) est dans ladite position d'expansion, ledit élément d'ancrage (2) comportant au moins une patte de verrouillage (28) élastiquement déformable, ledit élément de blocage (3) étant pourvu d'au moins une butée (40) apte à coopérer avec ladite patte de verrouillage (28) pour verrouiller ledit élément de blocage (3) par rapport audit élément d'ancrage (2) dans ladite position d'expansion dudit élément de blocage (3),
**caractérisé en ce que** ladite patte de verrouillage (28) est prévue inclinée, l'extrémité libre de ladite patte de verrouillage (28) étant orientée vers ladite embase (22), **en ce que** ledit élément blocage (3) comporte au moins un montant délimitant avec ladite tige d'expansion (31) au moins une zone de réception (38) de ladite patte de verrouillage (28) dans ladite position d'expansion dudit élément de blocage (3), ledit montant étant pourvu de ladite au moins une butée (40) qui est apte à coopérer avec ladite patte de verrouillage (28) pour verrouiller ledit élément de blocage (3) par rapport audit élément d'ancrage (2) dans ladite position d'expansion dudit élément de blocage (3).

2. Dispositif de fixation (1) selon la revendication précédente, **caractérisé en ce que** ladite patte de verrouillage (28) est inclinée par rapport à une perpendiculaire à ladite embase (22) d'un angle α compris entre 0° et 45° et de préférence compris entre 0° et 30°.

3. Dispositif de fixation (1) selon l'une quelconque des revendications précédentes, **caractérisé en ce que** ladite patte de verrouillage (28) et la paroi de ladite zone de réception (42) ont des profils sensiblement complémentaires permettant de limiter, voire d'annuler l'espace résiduel situé entre ladite paroi et ladite patte de verrouillage (28) dans ladite position d'expansion dudit élément de blocage (3).

4. Dispositif de fixation (1) selon l'une quelconque des revendications précédentes, **caractérisé en ce que** ladite tête (30) comporte au moins une nervure (39) s'étendant le long dudit montant (37) à l'opposée de ladite butée (40), sensiblement parallèle à l'axe de ladite tige d'expansion (31), et agencée pour limiter la déformation dudit montant (37).

5. Dispositif de fixation (1) selon l'une quelconque des revendications précédentes, **caractérisé en ce que** ladite tête (30) comporte au moins un élément de renfort (41), porté par ledit montant (37) à l'opposée l'adite butée (40), sensiblement perpendiculaire à l'axe de ladite tige d'expansion (31), et agencé pour limiter la déformation dudit montant (37).

## Patentansprüche

1. Befestigungsvorrichtung (1) mit einer verstärkten Verriegelung zur Befestigung von Elementen auf einem Träger, wobei die Befestigungsvorrichtung (1) wenigstens
- über ein Verankerungselement (2), das eine Durchgangsöffnung (20) aufweist, wobei das Verankerungselement (2) einen Sockel (22) aufweist, der dazu eingerichtet ist, auf dem Träger aufzuliegen, und durch ein verformbares Organ (24) verlängert ist, das dazu eingerichtet ist, durch oder in den Träger einsetzbar zu sein, und
- über ein Blockierelement (3) verfügt, das einen Kopf (30) aufweist, der dazu eingerichtet ist, die zu befestigenden Elemente aufzunehmen, und durch einen Aufweitstift (31) verlängert ist, der in der Durchgangsöffnung (20) zwischen einer Nullstellung und einer Aufweitstellung bewegbar ist, in der er dazu vorgesehen ist, das verformbare Organ (24) zu verformen und seinen Rückzug aus dem Träger zu verhindern,
wobei das Verankerungselement (2) und das Blockierelement (3) so ausgebildet sind, dass sie sich gegenseitig verriegeln, wenn das Blockierelement (3) in der Aufweitstellung ist, wobei das Verankerungselement (2) wenigstens eine elastisch verformbare Verriegelungszunge (28) und das Blockierelement (3) wenigstens einen Anschlag (40) aufweist, der dazu eingerichtet ist, mit der Verriegelungszunge (28) zusammenzuwirken, um das Blockierelement (3) in Bezug auf das Verankerungselement (2) in der Aufweitstellung des Blockierelements (3) zu verriegeln,
**dadurch gekennzeichnet, dass** die Verriegelungszunge (28) schräg gestellt vorgesehen ist, wobei das freie Ende der Verriegelungszunge (28) in Richtung des Sockels (22) ausgerichtet ist, dass das Blockierelement (3) wenigstens eine Abstützung aufweist, die mit dem Aufweitstift (31) wenigstens einen Aufnahmebereich (38) der Verriegelungszunge (28) in der Aufweitstellung des Blockierelements (3) begrenzt, wobei die Abstützung über wenigstens einen Anschlag (40) verfügt, der dazu eingerichtet ist, mit der Verriegelungszunge (28) zusammenzuwirken, um das Blockierelement (3) mit Bezug auf das Verankerungselement (2) in der Aufweitstellung des Blockierelements (3) zu verriegeln.

2. Befestigungsvorrichtung (1) nach dem vorangehenden Anspruch, **dadurch gekennzeichnet, dass** die Verriegelungszunge (28) in Bezug auf eine Normale auf den Sockel (22) in einem Winkel α zwischen 0° und 45° und vorzugsweise zwischen 0° und 30° schräg gestellt ist.

3. Befestigungsvorrichtung (1) nach einem der vorangehenden Ansprüche, **dadurch gekennzeichnet, dass** die Verriegelungszunge (28) und die Wand des Aufnahmebereichs (42) einander im Wesentlichen komplementäre Profile aufweisen, die es erlauben, den verbleibenden Raum zwischen der Wand und der Verriegelungszunge (28) in der Aufweitstellung des Blockierelements (3) zu begrenzen oder sogar aufzuheben.

4. Befestigungsvorrichtung (1) nach einem der vorangehenden Ansprüche, **dadurch gekennzeichnet, dass** der Kopf (30) wenigstens eine Rippe (39) aufweist, die sich entlang der Abstützung (37) dem Anschlag (40) gegenüber erstreckt, im Wesentlichen parallel zu der Achse des Aufweitstifts (31) und angeordnet ist, um die Verformung der Abstützung (37) zu begrenzen.

5. Befestigungsvorrichtung (1) nach einem der vorangehenden Ansprüche, **dadurch gekennzeichnet, dass** der Kopf (30) wenigstens ein Verstärkungselement (41) aufweist, das von der Abstützung (37) dem Anschlag (40) gegenüber getragen, im Wesentlichen rechtwinklig zu der Achse des Aufweitstifts (31) und derart angeordnet ist, die Verformung der Abstützung (37) zu begrenzen.

## Claims

1. Fixing device (1) with reinforced locking, for fixing elements to a support, said fixing device (1) including at least:
- an anchoring member (2) having a through-hole (20) through it, said anchoring member (2) including a base (22) adapted to come to bear against said support and extended by a deformable member (24) adapted to be inserted through or into said support,
- a locking member (3) including a head (30) for receiving said elements to be fixed and extended by an expansion rod (31) movable in said through-hole (20) between a neutral position and an expanded position in which it is adapted to deform said deformable member (24) and prevent its withdrawal from said support, said anchoring member (2) and said locking member (3) being shaped to interlock with each other when said locking member (3) is in said expanded position, said anchoring member (2) including at least one elastically deformable locking tab (28), said locking member (3) including at least one abutment (40) adapted to cooperate with said locking tab (28) to lock said locking member (3) relative to said anchoring member (2) in said expanded position of said locking member (3),
**characterised in that** said locking tab (28) is inclined, the free end of said locking tab (28) being oriented towards said base (22), **in that** said locking member (3) includes at least one upright delimiting with said expansion rod (31) at least one area (38) for receiving said locking tab (28) in said expanded position of said locking member (3), said upright being provided with at least one abutment (40) that is adapted to cooperate with said locking tab (28) to lock said locking member (3) relative to said anchoring member (2) in said expanded position of said locking member (3).

2. Fixing device (1) according to the preceding claim, **characterised in that** said locking tab (28) is inclined relative to a perpendicular to said base (22) by an angle α between 0° and 45° and preferably between 0° and 30°.

3. Fixing device (1) according to either of the preceding claims, **characterised in that** said locking tab (28) and the wall of said receiving area (42) have substantially complementary profiles so as to limit or even eliminate the residual space situated between said wall and said locking tab (28) in said expanded position of said locking member (3).

4. Fixing device (1) according to any one of the preceding claims, **characterised in that** said head (30) includes at least one rib (39) extending along said upright (37) opposite said abutment (40), substantially parallel to the axis of said expansion rod (31) and adapted to limit the deformation of said upright (37).

5. Fixing device (1) according to any one of the preceding claims, **characterised in that** said head (30) includes at least one reinforcing member (41) carried by said upright (37) opposite said abutment (40), substantially perpendicular to the axis of said expansion rod (31) and adapted to limit the deformation of said upright (37).
